# EUROPÄISCHE PATENTSCHRIFT

(11) **EP 1 329 095 B1**
(45) Veröffentlichungstag und Bekanntmachung des Hinweises auf die Patenterteilung: **29.09.2004**
(21) Anmeldenummer: 00958080.4
(22) Anmeldetag: 15.09.2000
(51) Int. Cl.: H04N 3/00

(54) **MICROSCANFÜHRUNG**
GUIDANCE FOR MICROSCANNING
COMMANDE POUR MICROECHANTILLONNAGE

(43) Veröffentlichungstag der Anmeldung: 23.07.2003
(73) Patentinhaber: Sinar AG, 8245 Feuerthalen (CH)
(72) Erfinder: GFELLER, Karl, CH-8246 Langwiesen (CH)
(74) Vertreter: Troesch Scheidegger Werner AG
(86) Internationale Anmeldenummer: PCT/CH2000/000499
(87) Internationale Veröffentlichungsnummer: WO 2001/000001

(56) Entgegenhaltungen:
- EP-A- 0 804 039
- US-A- 5 315 411
- PATENT ABSTRACTS OF JAPAN vol. 1999, no. 01, 29. Januar 1999 (1999-01-29) & JP 10 285475 A (HEWLETT PACKARD CO <HP>), 23. Oktober 1998 (1998-10-23)

## Beschreibung

Verfahren zur linearen Führung einer im Abbildungsstrahl einer Kamera wirksamen Einrichtung.

Die vorliegende Erfindung betrifft ein Verfahren zur linearen Führung einer Bewegung begrenzten Hubes in einer vorgegebenen Richtung von einer im Abbildungsstrahl einer Kamera wirksamen Einrichtung bezüglich eines Bezugssystems an der Kamera. Sie betrifft weiter eine Anordnung zur Führung einer solchen Bewegung.

Die Erfindung geht aus von Problemen die sich im Rahmen der Digitalkamera-Technik, insbesondere der Standbild-Digitalkamera-Technik ergeben, dabei ganz besonders im Rahmen der Multi-Shot-Technik.

Bei der Multi-Shot-Technik wird grundsätzlich die Matrix opto-elektrischer Wandlerelemente üblicherweise als Pixel-Matrix bezeichnet - beispielsweise ein CCD-Flächenchips, zwei oder mehrere Male im Abbildungsstrahlengang verschoben und durch Auslösung jeweiliger Teilbildabspeicherung mehrere Teilbilder registriert. Diese wurden gesamthaft zu einem einheitlichen Bildresultat verarbeitet. Dabei wird sichergestellt, dass an jedem Bildpunkt des Abbildungsstrahles die vorgesehenen, üblicherweise drei Grundfarben - selektiven Wandlerelemente wirksam werden. Es ist also notwendig, dass die Pixel-Matrix sequentiell, bezüglich des Abbildungsstrahls, verschoben wird und, entsprechend sequentiell Teilbilder registriert werden. Für die Qualität des resultierenden Bildresultates ist es von ausschlaggebender Bedeutung, dass die erwähnte Pixel-Matrix-Verschiebung höchst präzise und exakt wiederholbar erfolgt, sowohl was den Verschiebungshub wie auch was die Verschiebungsrichtung anbelangt.

Patent Abstracts of Japan, JP-A-09101043, offenbart Feditmittel zur Bewegung des Pixel-Matrix-Elementes (5).

Bezüglich der erwähnten Multi-Shot-Technik wird auf die technische Informationsbrochure von RODENSTOCK Präzisionsoptik GmbH, Isartalstr. 43, D-80469 München, Germany, 4/99 W. E. Schön 9543 512 1512 (Englisch) bzw. 9543 512 1511 (Deutsch) verwiesen mit dem Titel "Digitale Fotografie und ihre Ansprüche an das Aufnahmeobjektiv" bzw. "Digital photography and its demands on the taking lens", insbesondere auf den Abschnitt "Another ingenious trick: scanning with the CCD area array for even better image quality".

Aus diesem technischen Komplex heraus zielt die vorliegende Erfindung grundsätzlich auf die präzise Richtungsführung der Wandler-Matrix im Abbildungsstrahl einer Standbild-Digitalkamera ab. Sie stellt sich mithin spezifisch die Aufgabe ein Verfahren bzw. eine Anordnung zu schaffen, mittels welcher eine Wandlermatrix-Bewegungsführung ermöglicht wird, die
. höchst präzise
. konstruktiv einfach und wenig aufwendig
. verschleiss- und abriebarm ist.

Durch die nachfolgend spezifizierte, erfindungsgemässe Lösung des Bewegungsführungsproblems im spezifischen, obengenannten Zusammenhang, wird aber grundsätzlich ein Bewegungsführungs-Verfahren bzw. eine entsprechende Anordnung geschaffen, die überall dort einsetzbar sind, wo es erforderlich ist, präzise Bewegungen einer im Abbildungsstrahl einer Kamera wirksamen Einrichtung zu realisieren. Dies kann beispielsweise auch die Bewegung einer Farbfilter-Matrix sein.

Die gestellte Aufgabe wird an einem Verfahren eingangs genannter Art dadurch gelöst, dass die Einrichtung mindestens mit einer Bewegungskomponente in der vorgegebenen Richtung bewegt wird und die Ausschliesslichkeit der Bewegung in besagter Richtung durch gelenkige Verbindung der Einrichtung mit dem Bezugssystem sichergestellt wird, mit Gelenkschwenkachsen, die parallel zueinander und senkrecht zur genannten Richtung stehen.

Für die Realisation der erfindungsgemäss angestrebten, exakten, linearen Bewegungsführung wird mithin nicht eine translatorische Führung in der angestrebten Richtung realisiert, sondern, erfindungsgemäss, diese präzise Führung durch Schwenklager sichergestellt. Damit wird einerseits die geforderte, hohe Führungspräzision erreicht und es entfallen translatorische Führungen, wie beispielsweise Kugelführungen, etc., womit auch die weiteren Forderungen nach konstruktiver Einfachheit, Spielfreiheit, Verschleiss- und Abriebarmut erfindungsgemäss vollumfänglich erfüllt werden.

Soll nun die erwähnte Einrichtung bei der es sich im speziellen um eine Matrix opto-elektrischer Wandler handelt, nicht nur präzise, linear in einer vorgegebenen Richtung geführt werden - unabhängig davon, ob der Bewegungsantrieb nur exakt in besagter Richtung wirkt oder zusätzlich Antriebskomponente in einer dazu senkrechten Richtung erzeugt - sondern soll die erwähnte Einrichtung, im Sinne einer Kreuztischführung, in zwei senkrecht aufeinanderstehenden der vorgegebenen Richtungen geführt werden, so werden zwei der erwähnten, gelenkigen Verbindungen vorgesehen, deren Gelenkschwenkachsen je senkrecht zu einer der besagten Richtungen stehen. Wohl kann damit die Einrichtung, wie bei einem Kreuztisch, in beliebiger Richtung in einer Ebene bewegt werden, bezüglich der Antrieb in den jeweiligen Richtungen gilt aber, dass nur und ausschliesslich, Antriebskomponenten in den jeweiligen vorgegebenen Richtungen wirksam werden. Damit wird eine exakte reproduzierbare Bewegungssteuerung möglich, in Grenzen unabhängig davon, ob die richtungsspezifisch vorgesehenen Antriebe, zusätzlich zu Antriebskomponenten in den ihnen zugeordneten Richtungen, weitere Antriebskomponenten erzeugen oder nicht. Obwohl bevorzugt, wie bei einer üblichen Kreuztischführung die geführten Richtungen senkrecht aufeinander stehen, ist dies nicht zwingend. Sie sind generell gewinkelt, damit auch die jeweiligen Gelenkschwenkachsen.

Das erfindungsgemässe Verfahren wird bevorzugterweise an einer Digitalkamera, dabei vorzugsweise an einer Stillbildkamera, eingesetzt, dabei insbesondere für die Führung einer opto-elektrischen Wandleranordnung, vorzugsweise CCD- oder CMOS-Image-Sensor-Anordnung im Abbildungsstrahl. Dies wird insbesondere für die Bewegung der Wandleranordnung bei Multi-Shot-Technik eingesetzt.

Zur Lösung der erfindungsgemäss gestellten Aufgabe zeichnet sich die Anordnung eingangs genannter Art dadurch aus, dass
- eine Kopplungsanordnung für einen Antrieb zwischen Bezugssystem und Einrichtung vorgesehen ist,
- eine ebene Bewegungsführung für die Einrichtung, und
- eine Scharnierverbindung zur Einrichtung, die mindestens drei beabstandete, zueinander parallele Gelenk-Schwenkachsen hat, die parallel zur erwähnten Ebene liegen.

Bevorzugte Ausführungsformen der erfindungsgemässen Anordnung sind in den Ansprüchen 7 bis 13 spezifiziert, eine Digitalkamera mit einer solchen Anordnung in Anspruch 14.

Die Erfindung wird anschliessend beispielsweise anhand von Figuren erläutert.
Es zeigen:
- Fig. 1: schematisch, eine erfindungsgemässe Anordnung zur Erläuterung des prinzipiellen, erfindungsgemässen Verfahrens,
- Fig. 2: eine perspektivische Ansicht einer erfindungsgemässen Anordnung, nach dem erfindungsgemässen Verfahren arbeitend in bevorzugter Ausführungsform, für die Bewegungsführung einer Matrix opto-elektrischer Wandler im Rahmen der Multi-Shot-Technik an einer Standbildkamera.

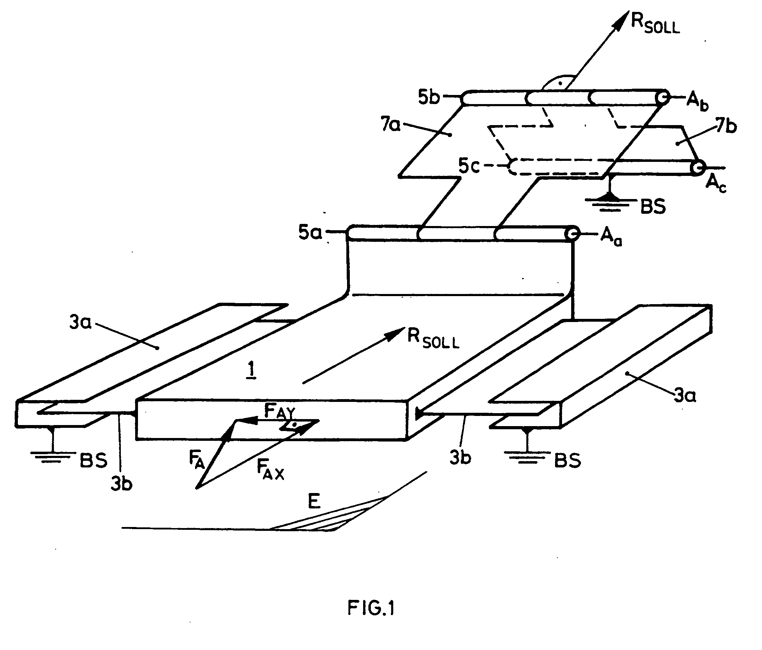

In Figur 1 ist, perspektivisch und schematisch, eine vereinfachte, erfindungsgemässe Anordnung dargestellt, anhand derer das erfindungsgemässe Verfahren erläutert werden soll. Eine Einrichtung 1, wie insbesondere eine Matrix opto-elektrischer Wandler an einer Digitalkamera, insbesondere einer Stillbildkamera, ist mit Bezug auf ein Bezugssystem BS in einer Ebene E beweglich, wie dies schematisch mit den Führungen 3a, bezugssystem-seitig und 3b seitens der Einheit 1 dargestellt ist. In der Ebene E greife eine Antriebskraft F_{A} in beliebiger Richtung auf die Einheit 1 ein, wobei diese Richtung durchaus zeit- und/oder abhängig von der IST-Position der Einheit 1 sein kann.

Die Einheit 1 soll aber durch Eingriff der Kraft F_{A} nur und ausschliesslich in einer vorgegebenen SOLL-Richtung entsprechend R_{SOLL} verschoben werden, entsprechend der Kraftkomponente F_{AX} und es soll die hierzu querstehende Kraftkomponente F_{AY} bezüglich der Bewegung von Einheit 1 wirkungslos sein. Herkömmliches Vorgehen wäre die Führungen 3a, 3b als translatorische Führungen so auszubilden, dass die Kräfte F_{AY} durch die Führungslagerung aufgenommen werden und nur die Kräfte in SOLL-Richung R_{SOLL}, also entsprechend F_{AX}, bewegungswirksam sind. Dies bedingte aber Vorsehen von Präzisionsführungen mit dem entsprechend hohen Aufwand, von translatorischen Führungen, welche relativ verschleissanfällig sind, und die grundsätzlich zur Erzeugung von Abriebpartikeln neigen.

Betrachtet man die Ausdehnung herkömmlicher Pixel von CCD-Matrizen, in der Grössenordnung von 10 µm Seitenlänge, so ist ersichtlich, dass Abriebpartikel durchaus zu einer Beeinträchtigung der Bildqualität führen können.

Erfindungsgemäss wird ein völlig anderes Vorgehen gewählt. Die Einheit 1 ist, wie in Fig. 1 dargestellt, über ein erstes Scharnier 5a mit Schwenkachse Aₐ, einen ersten Uebertragerhebel 7a, ein zweites Scharnier 5b mit Achse A_{b} einen zweiten Uebertragerhebel 7b sowie, ein drittes Scharnier 5c mit Achse A_{c} an das Bezugssystem BS angelenkt. Die mindestens drei vorzusehenden Scharnier- bzw. Schwenkachsen Aₐ bis A_{c} sind zueinander parallel und, wie sich für den Fachmann ohne weiteres ergibt, sie dürfen nicht alle drei in der Ebene E, der Führungsebene der Einheit 1, liegen.

Im weiteren ist die Ausrichtung der parallelen Achsen Aₐ bis A_{c} exakt senkrecht zur SOLL-Richtung R_{SOLL}.

Bezüglich Konstruktionsaufwand, Spielfreiheit, Abrieb und Verschleiss ist ohne weiteres ersichtlich, dass die vorzusehenden Schwenklagerungen wesentlich vorteilhafter sind als jede Art translatorischer Führung.

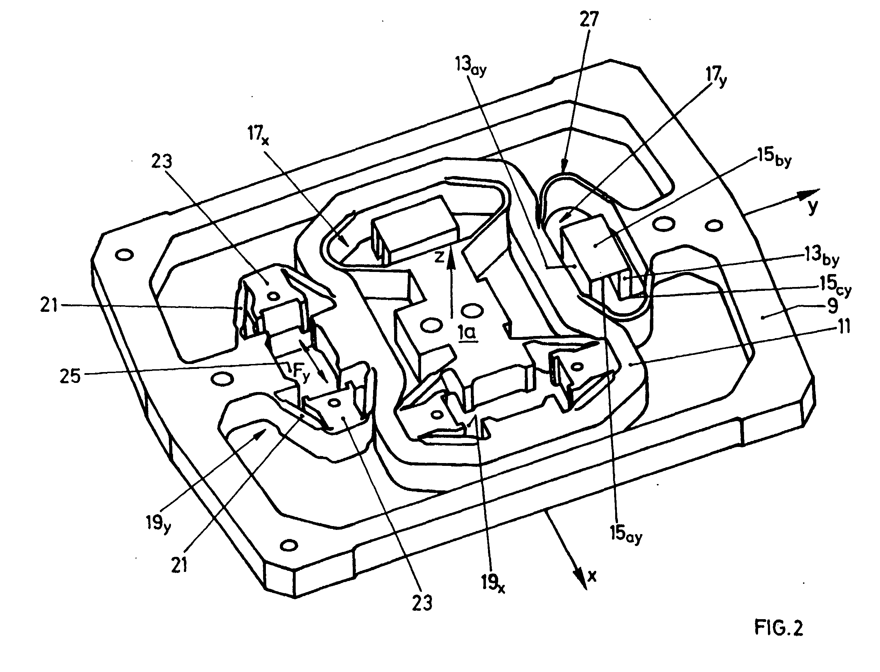

In Figur 2 ist nun, konsequent das anhand von Fig. 1 erläuterte Prinzip umsetzend, perspektivisch eine erfindungsgemässe Anordnung dargestellt, zur Bewegungsführung einer Matrix opto-elektrischer Wandlerelemente, wie insbesondere einer CCD-Matrix an einer Digitalkamera, zur Realisation des Multi-Shot-Verfahrens.

Gemäss der Anordnung von Fig. 2 ist ein Zentralbereich 1a vorgesehen, woran die erfindungsgemäss geführt zu bewegende Einheit, wie insbesondere eine CCD-Matrix, montiert wird.

Die beiden gezielt anzusteuernden Bewegungs-SOLL-Richtungen liegen gemäss Fig. 2 in den orthogonalen Achsen x, y. An einem Rahmen 9 zur Montage an einem Kamerateil, als eines der Bezugssysteme, ist, ähnlich einem Kreuztisch, ein in y-Richtung beweglicher Rahmen 11 erfindungsgemäss integriert. Bezüglich y-Richtung ist der Rahmen 11 mit der Aufnahme 1a für die Einheit 1 starr. Die für präzise Stabilisierung der Bewegung in y-Richtung vorgesehene Scharnieranordnung analog zu der in Fig. 1 erläuterten, ist mit 17_{y} bezeichnet. Sie umfasst zwischen Rahmen 9 und einem ersten Uebertragerhebel 13_{by} ein als Dünnstellenscharnier ausgebildetes Scharnier 15_{cy}. Die Schwenkachse des Scharniers 15_{cy} liegt exakt in x-Richtung.

Der Uebertragerhebel 13_{by} ist über ein weiteres Dünnstellenscharnier 15_{by} mit einem weiteren Uebertragerhebel 13_{ay} verbunden, welch letzterer (an der Darstellung von Fig. 2 verdeckt) über ein weiteres Dünnstellenscharnier 15_{ay} mit dem Rahmen 11 verbunden ist. Alle Schwenkachsen der Dünnstellenscharniere 15_{ay} bis 15_{cy} liegen in x-Richtung, also senkrecht zur damit zu führenden y-Richtung.

Auf der in y-Richtung entgegengesetzten Seite des Rahmens 11, mit Bezug auf die Scharnieranordnung 17_{y}, ist die Aufnahmeanordnung bzw. Ankopplungsanordnung 19_{y} für den Bewegungsantrieb der Aufnahme 1a für die Einheit 1 in y-Richtung vorgesehen der y-Antrieb. Der Rahmen 9 ist dort über vier Pantographen-Arme 21 mit dem Rahmen 11 verbunden. Diagonal im Pantographen querliegend, also in x-Richtung, ist ein Paar Ankopplungsorgane 23 vorgesehen, ausgerichtet auf eine mit dem Rahmen 9 fix verbundene Aufnahme 25 für ein Piezo-Antriebselement. Die über Dünnstellenscharniere angelenkten Pantograph-Arme 21 sind in z-Richtung so breit bemessen, dass sie, gemeinsam mit Dünnstellenscharnier - angelenkten Verbindungsfedern 27 zwischen Rahmen 9 und Rahmen 11 im Bereich der Scharnieranordnung 17_{y}, die stabile Aufhängung des Rahmens 11 im Rahmen 9 in z-Richtung sicherstellen.

Wird mit einem in die Aufnahme 25 eingelegten Piezo-Antriebselement die Antriebskraft F_{y} zwischen die Ankopplungsorgane 23 zur Wirkung gebracht, so wird der Pantograph mit den Pantographen-Armen 21 mehr oder weniger in x-Richtung gespreizt bzw. rückgestellt, selbstrückstellend durch Federwirkung, insbesondere der Federelemente 27. Damit verschiebt sich der Rahmen 11 in ± y-Richtung. Die Scharnieranordnung 17_{y} stellt dabei sicher, dass auch wenn, beispielsweise toleranzbedingt, über den erwähnten Pantographen der Antrieb auf Rahmen 11 nicht exakt in y-Richtung erfolgte, dies erzwungen wird, so dass mit vorzugsweise geregelter Ansteuerung des Piezo-Antriebes in der Aufnahme 25 ausschliesslich und exakt eine Verschiebung von Rahmen 11 in +/-y-Richtung erfolgt.

Innerhalb des Rahmens 11 sind die Antriebs- und Führungsvorkehrungen für die Aufnahme 1a in x-Richtung vorgesehen. Sie sind völlig analog aufgebaut, wie die bezüglich y-Richtung wirkenden Antriebe und Führungsvorkehrungen zwischen Rahmen 9 und Rahmen 11, die eben erläutert wurden. Aus Uebersichtsgründen werden deshalb nicht mehr alle Einzelteile erläutert, sondern es ist in Fig. 2, mit 17ₓ, die in x-Richtung Führung-sicherstellende Scharnieranordnung dargestellt, mit 19ₓ die wiederum über Pantographen-Arme wirkende x-Antriebsanordnung mit entsprechend eingelegtem Piezo-Antriebselement.

Mit der vorgestellten Anordnung ist es möglich, die Aufnahme 1a und die darauf montierte Einheit 1 im Mikrometer-Bereich präzise in der durch die Richtungen x und y aufgespannten Ebene beliebig zu bewegen. Dabei ist aber sichergestellt, dass der y-Verschiebungsantrieb in der Aufnahme 25 ausschliesslich Bewegungen in y-Richtung ansteuert und, entsprechend, der x-Antrieb an der Antriebseinheit 19ₓ in x-Richtung: Es wird erreicht, dass durch vorzugsweise geregelte Ansteuerung der Piezo-Antriebselemente exakt reproduzierbare Positionierungen der Einheit 1 möglich sind, d.h. exakte Verschiebungen der Wandlerelement-Matrix im Abbildungsstrahl der (nicht dargestellten) Digitalkamera.

Bevorzugterweise und wie in Fig. 2 dargestellt, wird die gesamte erfindungsgemässe Anordnung, abgesehen von den Antriebslemeneten, einteilig integral aufgebaut, vorzugsweise aus Metall, wie aus einer Bronze, Messing, Stahl oder Aluminium. Es können relativ grosse Fertigungstoleranzen in Kauf genommen werden, trotzdem sichern die erfindungsgemäss vorgesehenen Scharnierverbindungen, gemäss 17ₓ und 17_{y}, die erwähnte eindeutige und präzise Antriebsübertragung und -Führung.

## Patentansprüche

1. Verfahren zur linearen Führung einer Bewegung begrenzten Hubes in einer vorgegebenen Richtung (R_{SOLL}), einer im Abbildungsstrahl einer Kamera wirksamen Einrichtung (1) bezüglich eines Bezugssystems (BS) an der Kamera, **dadurch gekennzeichnet, dass** die Einrichtung (1) mindestens mit einer Bewegungskomponente (F_{AX}) in besagter Richtung (R_{SOLL}) bewegt wird und die Ausschliesslichkeit der Bewegung in besagter Richtung durch gelenkige Verbindung (5, 7) der Einrichtung (1) mit dem Bezugssystem (BS) sichergestellt wird, mit Gelenkschwenkachsen (5a - 5c) parallel zueinander und senkrecht zur genannten Richtung (R_{SOLL}) .

2. Verfahren nach Anspruch 1 zur Führung der Bewegung in zwei zueinander gewinkelten, vorzugsweise senkrecht aufeinanderstehenden der vorgegebenen Richtungen (x, y), **dadurch gekennzeichnet, dass** die Einrichtung in einer Ebene (E) parallel zu den zwei Richtungen (x, y) bewegt wird und durch zwei gelenkige Verbindungen (17_{y}, 17ₓ) der Einrichtung zum Bezugssystem (11), deren Gelenkschwenkachsen (15) je parallel zu einer der besagten Richtungen stehen, sichergestellt wird, dass die Bewegung ausschliesslich durch zwei, unabhängig von einander steuerbare Antriebskomponenten in je einer der Richtungen erzeugt wird.

3. Verwendung des Verfahrens nach einem der Ansprüche 1 oder 2 an einer Digitalkamera vorzugsweise einer Stillbilddigitalkamera.

4. Verwendung nach Anspruch 3 für die lineare Führung einer opto-elektrischen Wandleranordnung, vorzugsweise CCD- oder CMOS-Image-Sensor-Anordnung, im Abbildungsstrahl.

5. Verwendung nach Anspruch 4 für die Bwegung der Wandleranordnung bei Multi-Shot-Technik.

6. Anordnung zur Führung einer Bewegung einer im Abbildungsstrahl einer Kamera wirksamen Einrichtung (1), bezüglich eines Bezugssystems (11) an der Kamera, **dadurch gekennzeichnet, dass** sie umfasst:
- eine Kopplungsanordnung (23, 25) für einen Antrieb zwischen Bezugssystem (11) und Einrichtung (1, 1a);
- eine ebene Bewegungsführung für die Einrichtung;
- eine Scharnierverbindung (17_{y}, 17ₓ)zur Einrichtung (1, 1a), die mindestens drei beabstandete zueinander parallele Gelenk-Schwenkachsen (15ₐ - 15_{c}) hat, die parallel zur erwähnten Ebene (E) liegen.

7. Anordnung nach Anspruch 6, **dadurch gekennzeichnet, dass** zwei der Scharnierverbindungen (17y, 17ₓ) zur Einrichtung (1, 1a) vorgesehen sind, deren Schwenkachsen gewinkelt, vorzugsweise senkrecht zueiander stehen.

8. Anordnung nach einem der Ansprüche 6 oder 7, **dadurch gekennzeichnet, dass** mindestens ein Teil von Scharnieren der Scharnierverbindung als Dünnstellen- oder Filmscharnier ausgebildet ist.

9. Anordnung nach einem der Ansprüche 6 bis 8, **dadurch gekennzeichnet, dass** die Kopplungsanordnung mindestens eine Pantographenanordnung (21) hat.

10. Anordnung nach einem der Ansprüche 6 bis 9, **dadurch gekennzeichnet, dass** die Kopplungsanordnung zwei in der Ebene (E) senkrecht zueinander wirkende Pantographenanordnungen hat.

11. Anordnung nach einem der Ansprüche 6 bis 10 mit Bewegungsantrieb, **dadurch gekennzeichnet, dass** der Beewegungsantrieb mindestens ein Piezoelement hat.

12. Anordnung nach einem der Ansprüche 6 bis 11, **dadurch gekennzeichnet, dass** sie mindestens ein Piezoantriebselement hat, welches über eine Pantographenanordnung mit der Einrichtung wirkverbunden ist.

13. Anordnung nach einem der Ansprüche 6 bis 12, **dadurch gekennzeichnet, dass** sie modular, vorzugsweise einteilig ausgebildet ist.

14. Digitalkamera mit einer Anordnung nach einem der Ansprüche 6 bis 13, **dadurch gekennzeichnet, dass** die Einrichtung eine Matrix opto-elektrischer Wandlerelemente ist, vorzugsweise eine CCD- oder CMOS-Image-Sensor-Matrix.

## Claims

1. Process for linearly guiding a movement of limited extent in a prespecified direction (R_{SOLL}) of a device (1) operative in the imaging beam of a camera in relation to a reference system (BS) on the camera, **characterised in that** the device (1) is moved with at least one movement component (F_{AX}) in the said direction (R_{SOLL}) and the exclusivity of the movement in said direction is ensured by hinged connection (5, 7) of the device (1) with the reference system (BS), with hinge swivel axes (5a - 5c) parallel to each other and perpendicular to the said direction (R_{SOLL}).

2. Process according to claim 1 to guide the movement in two of the prespecified directions (x, y) angled to each other, preferably perpendicular to each other, **characterised in that** the device is moved in a plane (E) parallel to the two directions (x, y), and by two hinged connections (17_{y}, 17ₓ) of the device to the reference system (11), the hinge swivel axes of which (15) each stand parallel to one of the said directions, it is ensured that the movement is generated exclusively by two drive components controllable independently of each other, each in one of the directions.

3. Use of the process according to one of claims 1 or 2 on a digital camera, preferably a still image digital camera.

4. Use according to claim 3 for the linear guidance of an opto-electrical converter arrangement, preferably CCD or CMOS image sensor device, in the imaging beam.

5. Use according to claim 4 for the movement of the converter arrangement in multi-shot technique.

6. Arrangement for guiding a movement of a device (1), operative in the imaging beam of a camera, in relation to a reference system (11) on the camera, **characterised in that** it comprises:
- a coupling arrangement (23, 25) for a drive between the reference system (11) and the device (1, 1a);
- a planar movement guide for the device;
- a hinge connection (17_{y}, 17ₓ) to the device (1, a) which has at least three parallel hinge swivel axes (15a - 15c) mutually spaced apart and lying parallel to the said plane (E).

7. Arrangement according to claim 6, **characterised in that** two of the hinge connections (17_{y}, 17ₓ) to the device (1, 1a) are provided, the swivel axes of which are angled preferably perpendicular to each other.

8. Arrangement according to one of claims 6 or 7, **characterised in that** at least a part of the hinges of the hinge connection is formed as a thin point or film hinge.

9. Arrangement according to any of claims 6 to 8, **characterised in that** the coupling arrangement has at least one pantograph arrangement (21).

10. Arrangement according to any of claims 6 to 9, **characterised in that** the coupling arrangement has two pantograph arrangements acting in the plane (E) perpendicular to each other.

11. Arrangement according to any of claims 6 to 10 with movement drive, **characterised in that** the movement drive has at least one piezo element.

12. Arrangement according to any of claims 6 to 11, **characterised in that** it has at least one piezo drive element which is actively connected with the device via a pantograph arrangement.

13. Arrangement according to any of claims 6 to 12, **characterised in that** it is structured as a module, preferably of one piece.

14. Digital camera with an arrangement according to any of claims 6 to 13, **characterised in that** the device is a matrix of opto-electrical converter elements, preferably a CCD or CMOS image sensor matrix.

## Revendications

1. Procédé pour le guidage linéaire d'un mouvement à course limitée dans une direction prédéfinie (R_{SOLL}) d'un mécanisme (1) agissant dans le faisceau de reproduction d'une caméra par rapport à un système de référence (BS) au niveau de la caméra, **caractérisé en ce que** le mécanisme (1) est déplacé au moins avec une composante de déplacement (F_{AX}) dans la direction mentionnée (R_{SOLL}) et une liaison articulée (5, 7) du mécanisme (1) avec le système de référence (BS) garantit que le déplacement se fasse uniquement dans cette direction, avec des axes d'articulation (5a-5c) parallèles entre eux et perpendiculaires à la direction mentionnée (R_{SOLL}).

2. Procédé selon la revendication 1 pour le guidage du déplacement dans deux des directions prédéfinies (x, y) qui définissent un angle et qui sont de préférence perpendiculaires, **caractérisé en ce que** le mécanisme est déplacé dans un plan (E) parallèle aux deux directions (x, y), et deux liaisons articulées (17_{y}, 17ₓ) du mécanisme avec le système de référence (11), dont les axes d'articulation (15) sont parallèles aux directions mentionnées respectives, garantissent que le déplacement soit généré uniquement par deux composantes d'entraînement, aptes à être commandées indépendamment l'une de l'autre, dans l'une des directions.

3. Utilisation du procédé selon la revendication 1 ou 2 sur une caméra numérique, de préférence une caméra numérique à image fixe.

4. Utilisation selon la revendication 3 pour le guidage linéaire d'un convertisseur photoélectrique, de préférence un capteur d'image CCD ou CMOS, dans le faisceau de reproduction.

5. Utilisation selon la revendication 4 pour le déplacement du convertisseur avec une technique multishot.

6. Dispositif pour guider un déplacement d'un mécanisme (1) agissant dans le faisceau de reproduction d'une caméra, par rapport à un système de référence (11) au niveau de la caméra, **caractérisé en ce qu'**il comprend :
- un dispositif de couplage (23, 25) pour un entraînement entre le système de référence (11) et le mécanisme (1, 1a) ;
- un guidage de déplacement plan pour le mécanisme ;
- une liaison à charnière (17_{y}, 17ₓ) avec le mécanisme (1, 1a), qui comporte au moins trois axes d'articulation (15ₐ-15_{c}) espacés et parallèles entre eux, qui sont parallèles au plan (E).

7. Dispositif selon la revendication 6, **caractérisé en ce qu'**il est prévu deux liaisons à charnière (17_{y}, 17ₓ) avec le mécanisme (1, la), dont les axes de pivotement définissent un angle et sont de préférence perpendiculaires.

8. Dispositif selon la revendication 6 ou 7, **caractérisé en ce qu'**une partie au moins des charnières de la liaison à charnière sont conçues comme des charnières amincies ou en forme de film.

9. Dispositif selon l'une des revendications 6 à 8, **caractérisé en ce que** le dispositif de couplage a au moins un mécanisme à pantographe (21).

10. Dispositif selon l'une des revendications 6 à 9, **caractérisé en ce que** le dispositif de couplage a deux mécanismes à pantographe qui agissent dans le plan (E), perpendiculairement l'un par rapport à l'autre.

11. Dispositif selon l'une des revendications 6 à 10 avec un entraînement de déplacement, **caractérisé en ce que** l'entraînement de déplacement a au moins un élément piézoélectrique.

12. Dispositif selon l'une des revendications 6 à 11, **caractérisé en ce qu'**il a au moins un élément d'entraînement piézoélectrique qui est en relation fonctionnelle avec le mécanisme grâce à un mécanisme à pantographe.

13. Dispositif selon l'une des revendications 6 à 12, **caractérisé en ce qu'**il a une construction modulaire, de préférence en une partie.

14. Caméra numérique avec un dispositif selon l'une des revendications 6 à 13, **caractérisée en ce que** le mécanisme est constitué par une matrice d'éléments convertisseurs photoélectriques, de préférence une matrice de capteur d'image CCD ou CMOS.
